# FASCICULE DE BREVET EUROPEEN

(11) **EP 4 282 792 B1**
(45) Date de publication et mention de la délivrance du brevet: **15.01.2025**
(21) Numéro de dépôt: 23173223.1
(22) Date de dépôt: 12.05.2023
(51) Int. Cl.: B65G 47/51, B65G 1/04

(54) **PROCÉDÉ DE RÉCEPTION, DE STOCKAGE ET DE PRÉLÈVEMENT D'ARTICLES**
VERFAHREN ZUM EMPFANGEN, LAGERN UND ENTNEHMEN VON GEGENSTÄNDEN
METHOD FOR RECEIVING, STORING AND PICKING ARTICLES

(30) Priorité: 23.05.2022 FR 2204900
(43) Date de publication de la demande: 29.11.2023
(73) Titulaire: NORCAN SAS, 67500 Haguenau (FR)
(72) Inventeur: NAAS, Raphaël, 67230 KALTENHOUSE (FR)
(74) Mandataire: Hege, Frédéric

(56) Documents cités:
- DE-A1- 102010 020 146
- JP-A- 2019 182 557
- JP-A- 2020 015 583
- US-A1- 2017 200 248
- US-A1- 2021 009 348
- US-A1- 2021 061 569
- SAVOYE: "SAVOYE X-PTS BUFFER SEQUENCER for highly efficient robotic-picking solutions.", 20 January 2020 (2020-01-20), XP093019524, Retrieved from the Internet <URL:https://www.youtube.com/watch?v=VD0FQn1ghdY&ab_channel=SAVOYE> [retrieved on 20230131]

## Description

La présente invention se situe dans le domaine de la manutention. Elle concerne plus particulièrement un procédé de réception, de stockage et de prélèvement d'articles.

Dans une installation industrielle telle qu'une usine, il est courant qu'un certain nombre d'articles divers, en provenance de différentes sources, soient livrés à différentes heures de la journée. Ces articles sont alors souvent stockés dans un espace de stockage temporaire, avant d'être envoyés vers leur destination finale au sein de l'installation industrielle. L'espace de stockage temporaire est souvent peu optimal. Il s'agit par exemple de chariots grillagés, et/ou d'étagères, qui occupent un espace important au sol dans ladite installation. De plus les articles ne sont pas toujours rangés de façon ordonnée, et du temps peut être perdu pour chercher un article particulier. Enfin les transferts d'articles ou certains d'entre eux doivent parfois être fait à la main par des opérateurs, ce qui engendre une fatigue physique voire des maladies professionnelles.

US 2021/009348 A1 divulgue un procédé ainsi qu'un système selon les préambules respectifs des revendications 1 et 5.

Un objet de la présente invention est de proposer un procédé pouvant être entièrement automatisé permettant de recevoir et stocker des articles, et de prélever un article particulier.

Un autre objet de la présente invention est de proposer un procédé de réception, de stockage et de prélèvement d'articles permettant de réduire l'espace au sol requis.

Un autre objet de la présente invention est de proposer un procédé de réception, de stockage et de prélèvement d'articles tout en évitant la reprise en main des articles par un opérateur, ce qui présente l'avantage de réduire les risques sur la santé des opérateurs.

Un autre objet de la présente invention est de proposer un procédé de réception, de stockage et de prélèvement d'articles permettant une économie de manutention des articles et donc une réduction de main d'oeuvre.

Un autre objet de la présente invention est de proposer un procédé de réception, de stockage et de prélèvement d'articles permettant une réduction du risque de perte d'un article.

Un autre objet de la présente invention est de proposer un procédé de réception, de stockage et de prélèvement d'articles permettant une réduction du risque d'erreur de prélèvement d'article, et donc du risque d'erreur de préparation de commande, qui peuvent représenter un coût important.

Un autre objet de la présente invention est de proposer un procédé de réception, de stockage et de prélèvement d'articles offrant un haut niveau de sécurité contre les accidents et les vols.

Un autre objet de la présente invention est de proposer un procédé de réception, de stockage et de prélèvement d'articles permettant de minimiser le temps passé par un livreur, pour livrer des articles.

Un autre objet de la présente invention est de proposer un procédé de réception, de stockage et de prélèvement d'articles permettant à un livreur de livrer des articles à l'intérieur d'une zone réservée de l'installation industrielle, sans accéder lui-même à l'intérieur de ladite zone.

La présente invention a pour objet de répondre au moins en partie aux objets précités en proposant un procédé utilisant deux convoyeurs de stockage, et deux ascenseurs, l'ensemble formant une boucle verticale pouvant être parcourue par les articles stockés. A cet effet, elle propose un procédé de réception, de stockage et de prélèvement d'articles comportant les étapes suivantes dans l'ordre :
- réception des articles sur une station de réception,
- transfert d'un premier article vers un ascenseur amont, puis vers un premier convoyeur horizontal sur lequel au moins un deuxième article se trouve stocké préalablement, ledit premier convoyeur étant apte à transférer des articles dudit ascenseur amont vers un ascenseur aval,
- transfert dudit au moins un deuxième article vers ledit ascenseur aval, puis vers un deuxième convoyeur horizontal situé au-dessus ou en dessous dudit premier convoyeur et apte à transférer des articles dudit ascenseur aval vers ledit ascenseur amont,
- transfert dudit premier article vers ledit ascenseur aval, puis vers une station de prélèvement, et dans lequel au moins deux articles ont des dimensions différentes, ledit procédé comportant une étape de mesure d'au moins une dimension de tous ou une partie des articles, un contrôleur prenant en compte cette mesure afin de déterminer lors de l'étape de transfert de la station de réception vers un convoyeur l'espace alloué à chaque article mesuré sur ledit convoyeur vers lequel il est transféré.

Grâce à ces dispositions, n'importe quel article stocké sur les convoyeurs peut être prélevé avant les autres sur demande, le simple ajout de deux ascenseurs autour des convoyeurs utilisés pour le stockage formant un ensemble compact. Selon d'autres caractéristiques :
- ledit procédé peut comporter en outre les étapes suivantes :
   - transfert d'au moins deux articles vers ledit ascenseur amont, puis vers un troisième convoyeur situé au-dessus ou en-dessous desdits premier et deuxième convoyeurs,
   - transfert de l'article situé sur ledit troisième convoyeur et le plus proche de ladite station de prélèvement vers l'ascenseur aval, puis vers ladite station de prélèvement,
   ce qui permet de combiner un espace de stockage dans lequel n'importe quel article particulier peut être individuellement prélevé sur demande, et un espace de stockage dans lequel le premier article stocké est le premier à être prélevé, ou stockage en mode « FIFO »,

- avant l'étape de transfert d'un article sur un convoyeur, l'instruction peut être donnée à un contrôleur de transférer cet article particulier vers ladite station de prélèvement, ledit contrôleur commandant alors lesdits premier et deuxième convoyeurs, et lesdits ascenseurs amont et aval, afin de transférer ledit article cible vers la station de prélèvement, ce qui permet d'accélérer le traitement des articles urgents,
- ledit procédé peut comporter en outre une étape de transfert d'au moins un article de la station de prélèvement vers un robot autonome, ce qui permet de minimiser le maniement des articles par des opérateurs humains, et ainsi de diminuer les risques sur la santé des opérateurs.

La présente invention concerne également un système de réception, de stockage et de prélèvement d'articles comportant :
- une station de réception, apte à accueillir au moins un article,
- une station de prélèvement, apte à accueillir au moins un article,
- au moins un ascenseur amont, ledit système comportant un moyen de transfert d'articles de ladite station de réception vers ledit ascenseur amont, et au moins un ascenseur aval, ledit système comportant un moyen de transfert d'articles entre ledit ascenseur aval et ladite station de prélèvement,
- au moins deux convoyeurs disposés l'un au-dessus de l'autre, au moins un desdits au moins deux convoyeurs étant apte à transférer des articles dudit ascenseur amont vers ledit ascenseur aval, et au moins un autre desdits au moins deux convoyeurs étant apte à transférer des articles dudit ascenseur aval vers ledit ascenseur amont, et
- un contrôleur commandant lesdits ascenseurs amont et aval et lesdits convoyeurs et une mémoire apte à communiquer avec ledit contrôleur afin que la position de chaque article disposé sur un desdits convoyeurs soit enregistrée dans ladite mémoire, et que le contrôleur soit apte à commander lesdits ascenseurs et lesdits convoyeurs afin d'amener un article donné sur la station de prélèvement après avoir transféré le cas échéant au moins un autre article disposé entre ledit article et l'ascenseur aval vers un autre convoyeur, et qui comprend un moyen de mesure étant
configuré de sorte à mesurer au moins une dimension d'un article, ledit contrôleur étant configuré de sorte à prendre en compte cette mesure afin de déterminer un espace alloué audit article sur un desdits convoyeur. Ceci permet d'optimiser l'utilisation de l'espace de stockage lorsque les articles sont de différentes dimensions.

Grâce à ces dispositions, n'importe quel article stocké sur les convoyeurs peut être prélevé avant les autres sur demande, le simple ajout de deux ascenseurs autour des convoyeurs utilisés pour le stockage formant un ensemble compact. Selon d'autres caractéristiques :
- ledit système peut comporter au moins trois convoyeurs disposés l'un au-dessus de l'autre, au moins un desdits convoyeurs étant configuré pour que le premier article à être transféré vers la station de prélèvement soit l'article stocké le plus proche de l'ascenseur aval, ce qui permet de combiner un espace de stockage dans lequel n'importe quel article particulier peut être individuellement prélevé sur demande, et un espace de stockage dans lequel le premier article stocké est le premier à être prélevé, ou stockage en mode « FIFO ,
- au moins un desdits convoyeurs peut comprendre au moins deux bandes transporteuses disposées l'une à la suite de l'autre, ce qui permet d'optimiser l'utilisation du système et notamment de libérer rapidement l'ascenseur amont après le transfert d'un article, et de gérer la distance dudit article par rapport à l'article le plus proche déjà en place sur ledit convoyeur à l'aide des au moins deux bandes transporteuses,
- la station de réception peut comporter une paroi, ladite paroi comportant une ouverture permettant le passage des articles, ce qui permet de séparer le système en une zone de livraison, dans laquelle les livreurs extérieurs sont autorisés à entrer pour déposer les articles, et une zone sécurisée où les articles livrés sont rapidement transférés, interdite d'accès sauf personnel autorisé.

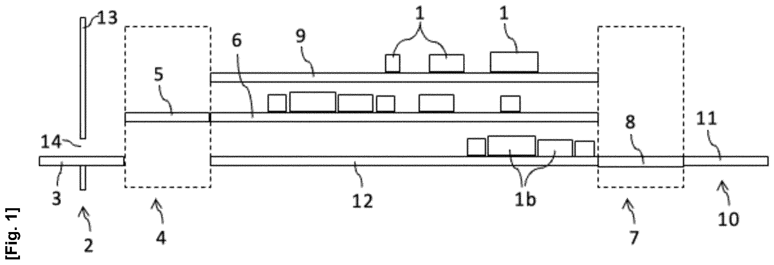

La présente invention sera mieux comprise à la lecture de la description détaillée qui fait suite, en référence aux figures annexées dans lesquelles : La fig. 1 est une vue schématique de côté d'un système selon l'invention, Dans le cadre de la présente invention, le terme « article » désigne des articles 1 qui peuvent être de toutes sortes, et de toutes tailles. Il peut s'agir d'articles 1 qui sont tous de dimensions et/ou de poids identiques, ou d'articles 1 de dimensions et/ou de poids divers. Les articles 1 sont de préférence des colis, qui peuvent avoir par exemple des dimensions comprises entre 200x200x20 mm et 800x600x600 mm. Le poids des articles 1 peut par exemple être inférieur ou égal à 40 kg. On peut prévoir que des articles 1 plus petits qu'une dimension minimale soient déposés dans une caisse pour pouvoir être gérés de la même manière que des articles 1 de dimensions suffisamment importantes1 . On peut prévoir par ailleurs que des articles 1 plus grands qu'une dimension maximale soient traités manuellement.

Le procédé de réception, de stockage et de prélèvement comporte au moins les étapes suivantes, dans l'ordre :
- réception des articles 1 sur une station de réception 2. Les articles 1 peuvent par exemple être déposés sur la station de réception 2 par un livreur. La station de réception peut comporter une table de réception. La station de réception comporte de préférence un convoyeur de réception 3. Le convoyeur de réception 3 peut être de tout type. Il s'agit par exemple d'un convoyeur gravitaire présentant une inclinaison avec l'horizontale. Il s'agit de préférence d'un convoyeur horizontal, ce qui permet d'éviter une pression d'un article 1 lourd sur un autre article 1 fragile. Le convoyeur de réception 3 peut comprendre des rouleaux rotatifs permettant de facilement pousser les articles 1 d'un bout à l'autre du convoyeur de réception 3, ou un tapis roulant. Le convoyeur de réception 3 peut avoir une longueur variable afin d'optimiser l'espace occupé par la station de réception 2, il s'agit par exemple d'un convoyeur accordéon.
- transfert d'un premier article 1 vers un ascenseur amont 4. De préférence l'ascenseur amont 4 comprend un tapis roulant amont 5, et le transfert vers l'ascenseur amont 4 est réalisé par l'action combinée du convoyeur de réception 3, et du tapis roulant amont 5. Après transfert du premier article 1 vers l'ascenseur amont 4, le premier article 1 est transféré vers un premier convoyeur 6 horizontal, sur lequel au moins un deuxième article 1 est préalablement stocké. Le premier convoyeur 6 peut être à la même hauteur que la station de réception 2 et le cas échéant que le convoyeur de réception 3, de sorte que l'extrémité inférieure des articles 1 se trouvant sur la station de réception 2, le cas échéant le convoyeur de réception 3, et sur le premier convoyeur 6, sont à la même hauteur. Dans ce cas l'ascenseur amont 4 ne fait pas monter ou descendre l'article 1 avant de le transférer vers le convoyeur 6. Dans d'autres cas, le premier convoyeur 6 est situé à une hauteur différente, plus haut ou plus bas que la station de réception 2 et le cas échéant que le convoyeur de réception 3. Dans ces cas, l'ascenseur amont 4 commence par faire monter ou descendre le premier article 1 jusqu'à la hauteur du premier convoyeur 6, avant transfert du premier article 1 vers le premier convoyeur 6. Le transfert du premier article 1 de l'ascenseur amont 4 vers le premier convoyeur 5 est de préférence réalisé par l'action combinée du tapis roulant amont 5 et du premier convoyeur 6. Le premier convoyeur 6 est apte à transférer des articles 1 dudit ascenseur amont 4 vers un ascenseur aval 7. De préférence l'ascenseur aval 7 comprend un tapis roulant aval 8, et les transferts d'articles 1 du premier convoyeur 6 vers l'ascenseur aval 7 sont réalisés par l'action combinée du premier convoyeur 6, et du tapis roulant aval 8,
- lors d'une demande de prélèvement dudit premier article 1, transfert dudit au moins un deuxième article 1 vers ledit ascenseur aval 7, de préférence par l'action combinée du premier convoyeur 6, et du tapis roulant aval 8. Puis l'au moins un deuxième article est transféré de l'ascenseur aval 7 vers un deuxième convoyeur 9 horizontal situé au-dessus ou en dessous dudit premier convoyeur 6. Le deuxième convoyeur 9 est de préférence de longueur identique au premier convoyeur 6. Le deuxième convoyeur 9 est apte à transférer des articles 1 dudit ascenseur aval 7 vers ledit ascenseur amont 4. Le deuxième convoyeur 9 est donc apte à fonctionner dans la direction inverse du premier convoyeur 6. Ainsi les premier et deuxième convoyeurs 6, 9, avec les ascenseurs amont 4 et aval 7, forment une boucle le long de laquelle peuvent être déplacés les articles 1. Si nécessaire, lors de cette étape, certains articles 1 peuvent être transférés du premier convoyeur 6 vers le deuxième convoyeur 9 par l'intermédiaire de l'ascenseur aval, puis du deuxième convoyeur 9 vers le premier convoyeur 6 par l'intermédiaire de l'ascenseur amont,
- transfert dudit premier article 1 vers ledit ascenseur aval 7, de préférence par l'action combinée du premier convoyeur 6, et du tapis roulant aval 8. Le premier article 1 est ensuite transféré vers une station de prélèvement 10. La station de prélèvement 10 comporte de préférence un convoyeur de prélèvement 11, et le transfert du premier article 1 de l'ascenseur aval 7 vers la station de prélèvement 10 est de préférence effectué par l'action combinée du tapis roulant aval 8 et du convoyeur de prélèvement 11.

Le procédé selon l'invention permet donc de stocker une pluralité d'articles 1 sur un premier convoyeur 6, et de prélever un article 1 même si celui-ci n'est pas le premier à avoir été disposé sur le premier convoyeur 6. Les articles 1 situés sur le premier convoyeur 6 plus proches de la station de prélèvement 10 que l'article 1 à prélever sont envoyés vers le deuxième convoyeur 9, par l'intermédiaire de l'ascenseur aval 7, afin de libérer l'espace pour l'article 1 à prélever jusqu'à l'ascenseur aval 7, à partir duquel il peut être transféré vers la station de prélèvement 10.

Dans certaines applications, le transfert d'un article 1 du premier convoyeur 6 jusqu'à la station de prélèvement peut être uniquement déclenché par une requête initiée par un opérateur sur une interface homme-machine.

Lorsqu'ils sont dans la station de réception 2, il peut être prévu une étape d'étiquetage des articles 1, l'étiquette comportant par exemple un code-barres ou un code Datamatrix. Cet étiquetage permet de repérer tous ou une partie des articles 1 par un identifiant unique, et de lier ces informations à d'autres données telles que sa provenance avant dépôt sur la station de réception 2, sa destination après prélèvement de la station de prélèvement 10, et optionnellement son poids, une ou ses dimensions, etc. Ces données peuvent être alors stockées dans une mémoire reliée à un contrôleur. Un scan de l'étiquette permet par exemple à un opérateur ou à un capteur optique situé par exemple sur la station de réception 2 de retrouver toutes les informations pertinentes liées à un article 1.

Dans un mode de réalisation préféré de l'invention, les convoyeurs 6, 9 sont bidirectionnels, ce qui permet qu'ils puissent être utilisés pour le procédé selon l'invention et jouer tour à tour le rôle de premier, puis de deuxième convoyeur 6, 9. Ainsi il est possible de stocker des articles 1 sur toute la longueur de chacun des deux convoyeurs 6, 9, et de prélever au choix un article 1 se trouvant sur l'un ou l'autre des convoyeurs 6, 9. Plus de deux convoyeurs 6, 9, peuvent être utilisés, et au cours du prélèvement d'un premier article 1 particulier, le convoyeur sur lequel il se trouve sera le premier convoyeur 6, et n'importe lequel des autres convoyeurs 6, 9 peut être utilisé comme deuxième convoyeurs 9 pour y transférer les articles 1 présents sur le premier convoyeur 6 entre le premier article 1 et l'ascenseur aval 7.

Les convoyeurs pouvant être utilisés comme premier ou deuxième convoyeur 6, 9 sont désignés, dans la suite de la description, par l'appellation « convoyeur à prélèvement ciblé ».

Le procédé peut également utiliser au moins un troisième convoyeur 12, distinct des premier et deuxième convoyeurs 6, 9, situé au-dessus ou en-dessous de chacun des premier et deuxième convoyeurs 6, 9, et de préférence de même longueur. Le troisième convoyeur 12 peut être utilisé en mode « FIFO » (premier entré, premier sorti), selon un procédé comportant les étapes suivantes :
- transfert d'au moins deux articles 1b vers ledit ascenseur amont 4, de préférence par l'action combinée du convoyeur de réception 3 et du tapis roulant amont 5. Puis transferts de ces au moins deux articles 1b de l'ascenseur amont 4 vers le troisième convoyeur 12, de préférence par l'action combinée du tapis roulant amont 5 et du troisième convoyeur 12,
- lors d'une demande de prélèvement d'un article 1b, transfert de l'article 1b situé sur ledit troisième convoyeur 12 et le plus proche de ladite station de prélèvement 10 vers l'ascenseur aval 7, de préférence par l'action combinée du troisième convoyeur 12 et du tapis roulant aval 8. Cet article 1b est ensuite transféré de l'ascenseur aval 7 vers la station de prélèvement 10, de préférence par l'action combinée du tapis roulant aval 8 et du convoyeur de prélèvement 11.

Plusieurs troisième convoyeurs 12 différents peuvent être utilisés pour le procédé dans un même système, afin d'avoir une capacité de stockage plus importante en mode « FIFO ».

Les convoyeurs pouvant être utilisés comme troisième convoyeur 12 sont désignés, dans la suite de la description, par l'appellation « convoyeur « FIFO ». La présence du troisième convoyeur 12 permet d'utiliser un système unique pour différentes fonctions :
- les articles 1 stockés sur des convoyeurs utilisés comme convoyeurs à prélèvement ciblé 6, 9 peuvent être prélevés individuellement, quel que soit leur ordre d'arrivée,
- les articles 1b stockés sur des convoyeurs « FIFO » sont prélevés en mode « FIFO », c'est-à-dire que l'article 1b ayant été stocké depuis le plus longtemps est le premier à sortir.

Le procédé peut concerner des articles 1 de différentes dimensions, et comporter une étape de mesure d'au moins une dimension de tous les articles 1 ou de seulement une partie d'entre eux. Ainsi la taille de l'article 1 peut être utilisée comme paramètre pour décider de sa destination sur un des convoyeurs 6, 9, 12 de stockage. Un contrôleur est alors capable de prendre en compte l'au moins une dimension des articles 1 mesurés afin de prendre la décision de la longueur de convoyeur à attribuer à l'article 1, et de l'endroit où sera stocké l'article, c'est-à-dire quel convoyeur 6, 9, 12. Ceci permet d'optimiser l'espace utilisé pour le stockage, et ainsi de stocker un plus grand nombre d'articles 1 sur un espace identique, l'espace de stockage total étant fonction du nombre de convoyeurs 6, 9, 12 et de leur longueur. Le contrôleur peut également être apte à prendre en compte le statut d'un article 1 pour savoir s'il faut le stocker sur un convoyeur à prélèvement ciblé 6, 9, ou sur un convoyeur « FIFO » 12. Dans le cas où un article 1 doit être transféré vers un convoyeur à prélèvement ciblé 6, 9, les articles présents sur ces convoyeurs 6, 9 peuvent être déplacés le long de la boucle formée par ces deux convoyeurs à prélèvement ciblé 6, 9 et les ascenseurs amont 4 et aval 7 afin de stocker l'article 1 sur une section particulière d'un convoyeur 6, 9 permettant une utilisation optimisée de l'espace.

Le procédé peut comporter des étapes spéciales pour le traitement d'articles 1 urgents. Ainsi avant même l'étape de transfert d'un article 1 sur un convoyeur 6, 9 l'instruction peut être donnée au contrôleur commandant les convoyeurs 6, 9 et les ascenseurs amont 4 et aval 7 de transférer immédiatement ledit article 1 vers la station de prélèvement 10. Le contrôleur peut sélectionner le convoyeur 6 sur lequel le moins d'articles sont déjà stockés. Les éventuels articles 1 présents sur le premier convoyeur 6 peuvent alors être déplacés sur le deuxième convoyeur 9, puis si nécessaire, une fois l'article 1 engagé sur le convoyeur 6, certains de ces articles 1 peuvent éventuellement être retransférés sur le premier convoyeur 6, afin de laisser libre la voie pour l'article 1 vers la station de prélèvement 10.

A la fin du procédé, après avoir été transféré sur la station de prélèvement, l'article 1 peut être transféré de la station de prélèvement 10 vers un robot autonome. Le robot autonome peut alors se déplacer de façon autonome, en se basant sur une carte qu'il a en mémoire ou en se déplaçant vers une balise émettrice, et amener l'article 1 par exemple vers un autre lieu de stockage, ou vers un poste de travail.

Le procédé selon l'invention peut être mis en oeuvre dans un système de réception, de stockage et de prélèvement d'articles.

Le système, dont un mode de réalisation préféré est illustré en fig. 1, comporte une station de réception 2, apte à accueillir au moins un article 1 lorsqu'il arrive dans le système selon l'invention, par exemple amené par un livreur.

Le système comporte également une station de prélèvement 10, apte à accueillir au moins un article lorsqu'il doit être prélevé du système selon l'invention. La station de prélèvement 10 peut être accessible par un opérateur humain ou encore un robot autonome afin d'extraire les articles 1 du système selon l'invention.

Le système comporte encore :
- un ascenseur amont 4, et un moyen de transfert permettant de transférer des articles 1 de la station de réception 2 vers l'ascenseur amont 4. De préférence l'ascenseur amont 4 comprend un tapis roulant amont 5 et la station de réception comprend un convoyeur de réception 3, et le moyen de transfert comporte le tapis roulant amont 5, et le convoyeur de réception 3, et
- un ascenseur aval 7, et un moyen de transfert permettant de transférer des articles 1 de l'ascenseur aval 7 vers la station de prélèvement 10. De préférence l'ascenseur aval 7 comprend un tapis roulant aval 8 et la station de prélèvement comprend un convoyeur de prélèvement 11, et le moyen de transfert comporte le tapis roulant aval 8, et le convoyeur de prélèvement 11.

Le système comporte encore au moins deux convoyeurs 6, 9 disposés l'un au-dessus de l'autre, et de préférence de même longueur. Au moins un des convoyeurs 6, 9 est apte à transférer des articles 1 de l'ascenseur amont 4 vers l'ascenseur aval 7, et au moins un autre des convoyeurs 6, 9 est apte à transférer des articles 1 de l'ascenseur aval 7 vers l'ascenseur amont 4.

Le système comporte enfin un contrôleur apte à commander les ascenseurs amont 4 et aval 7, ainsi que les convoyeurs 6, 9. Le contrôleur peut communiquer avec une mémoire dans laquelle est enregistrée la position de chacun des articles 1 présents sur les convoyeurs à prélèvement ciblé 6, 9, et éventuellement des articles 1 présents sur des convoyeurs « FIFO ». Ainsi lorsqu'il est nécessaire de prélever un article 1 particulier d'un convoyeur à prélèvement ciblé 6, 9, le contrôleur peut connaître la position de cet article 1 particulier et commander les convoyeurs à prélèvement ciblé 6, 9 et les ascenseurs amont 4 et aval 7 afin d'opérer le prélèvement.

Le système selon l'invention comporte un moyen de mesure apte à mesurer au moins une dimension d'un article 1. Le moyen de mesure est de préférence situé dans la station de réception 2, et le contrôleur selon l'invention prend en compte la ou les dimensions d'un article 1 afin de déterminer une longueur de convoyeur à attribuer à l'article, et un emplacement optimal où le stocker, et ainsi de gérer l'espace de stockage afin d'en maximiser la capacité.

Le système peut encore comporter au moins trois convoyeurs, deux convoyeurs 6, 9 pouvant fonctionner comme des convoyeurs à prélèvement ciblé, et un autre convoyeur 12 pouvant fonctionner comme un convoyeur « FIFO », comme décrit ci-dessus. Bien sûr le système selon l'invention peut comporter plus de deux convoyeurs à prélèvement ciblé, par exemple quatre convoyeurs à prélèvement ciblé ou plus, et plus d'un convoyeur « FIFO », par exemple trois convoyeurs « FIFO » ou plus.

Dans un mode de réalisation particulier du système, la station de réception 2 comporte une paroi 13. La paroi 13 comporte une ouverture 14 permettant le passage des articles 1, le cas échéant lorsqu'ils sont sur le convoyeur de réception 3. Il peut être prévu que l'ouverture 14 soit fermée et verrouillée en permanence, sauf lors du passage d'un article 1. Cette paroi 13 permet d'empêcher l'accès à l'espace de stockage, où à une zone réservée dans l'installation industrielle, à une personne non autorisée. Ainsi une personne livrant un article 1 peut déposer l'article 1 sur la station de réception, cette personne n'ayant pas accès à l'espace de stockage et notamment aux convoyeurs 6, 9, 12. Cela permet par exemple de faire en sorte que les articles 1 livrés soient de suite transférés sur une partie de la station de réception 2 située dans une zone à accès réservé, sans que le livreur n'ait accès à ladite zone, et sans la présence d'une autre personne ayant accès à ladite zone. La réception d'articles 1 peut ainsi se faire en dehors des horaires de présence d'une personne de l'installation industrielle. Un opérateur peut par exemple être chargé à son arrivée à son poste de travail le matin, d'étiqueter les articles 1 qui ont été déposés pendant la nuit. La capacité de stockage de la station de réception 2 peut être configurée selon la quantité d'articles 1 qui peuvent arriver dans une nuit.

Selon un mode particulier de réalisation, l'ensemble des convoyeurs 6, 9, 12 horizontaux et des ascenseurs amont 4 et aval 7 est fermé par des parois, pour protéger les articles 1 entreposés contre toute possibilité de prélèvement non contrôlé par le contrôleur, et empêcher tout risque de chute. Ceci permet une gestion sous douane avec toutes les garanties nécessaires pour cela.

On peut prévoir aussi que la station de réception 2 comporte un convoyeur de réception 3 à longueur variable situé à l'extérieur d'une zone à accès réservé, par exemple dans un sas, pour permettre à un livreur de déposer des articles 1 supplémentaires en cas de besoin, tout en limitant l'encombrement dudit convoyeur de réception 3 quand il n'y a pas une telle quantité d'articles 1.

Dans le système, au moins un convoyeur 6, 9, 12 peut comprendre au moins deux bandes transporteuses disposées l'une à la suite de l'autre, de manière à ce que les articles parcourant un tel convoyeur 6, 9, 12 parcourent successivement chacune des bandes transporteuses. Les bandes transporteuses peuvent alors être commandées indépendamment les unes des autres, ce qui permet d'optimiser certaines opérations. Par exemple pour réaliser un transfert d'un article 1 sur ce convoyeur 6, 9, 12, si un autre article 1 est préalablement disposé à l'extrémité aval dudit convoyeur 6, 9, 12, immédiatement à proximité de l'ascenseur aval 7, la bande transporteuse sur laquelle l'autre article 1 est disposé peut rester fixe et il est possible de n'activer qu'une ou plusieurs bandes transporteuses situées en amont.

Selon un autre exemple, pour obtenir un stockage compact où une distance faible est systématiquement respectée entre chaque article 1, on peut prévoir deux bandes transporteuses constituant le convoyeur 6, 9, 12 ; la première bande transporteuse en amont des autres peut jouer le rôle d'une bande tampon ayant par exemple une longueur correspondant à la longueur maximale d'un article 1, ou encore environ la moitié de la longueur du convoyeur 6, 9, 12 ; lors du transfert d'un article 1 sur le convoyeur 6, 9, 12, le transfert peut être immédiatement réalisé entre l'ascenseur amont 3 et cette bande transporteuse d'attente, avant un ajustement précis de la distance entre l'article 1 juste transféré et le prochain article 1 en aval en faisant d'abord reculer si nécessaire la ou les bandes transporteuses en aval, puis en réalisant le transfert de la bande transporteuse d'attente vers la prochaine bande transporteuse en aval. Selon un autre mode de réalisation, les convoyeurs 6, 9, 12 horizontaux peuvent être des disques tournants disposés entre les deux ascenseurs amont 4 et aval 7, de sorte qu'une rotation du disque permet de transférer les articles 1 de l'ascenseur amont 4 vers l'ascenseur aval 7, et de l'ascenseur aval 7 vers l'ascenseur amont 4. Des dispositifs connus de l'homme du métier, tel que des pousseurs par exemple, permettent le transfert des articles des ascenseurs 4, 7 vers le convoyeur 6, 9, 12 horizontal, et du convoyeur 6, 9, 12 horizontal vers les ascenseurs 4, 7.

## Revendications

1. Procédé de réception, de stockage et de prélèvement d'articles comportant les étapes suivantes dans l'ordre :
- réception des articles (1) sur une station de réception (2),
- transfert d'un premier article (1) vers un ascenseur amont (4), puis vers un premier convoyeur (6) horizontal sur lequel au moins un deuxième article (1) se trouve stocké préalablement, ledit premier convoyeur (6) étant apte à transférer des articles (1) dudit ascenseur amont (4) vers un ascenseur aval (7),
- transfert dudit au moins un deuxième article (1) vers ledit ascenseur aval (7), puis vers un deuxième convoyeur (9) horizontal situé au-dessus ou en dessous dudit premier convoyeur (6) et apte à transférer des articles (1) dudit ascenseur aval (7) vers ledit ascenseur amont (4),
- transfert dudit premier article (1) vers ledit ascenseur aval (7), puis vers une station de prélèvement (10),
**caractérisé en ce qu'**au moins deux articles (1) ont des dimensions différentes, ledit procédé comportant une étape de mesure d'au moins une dimension de tous ou une partie des articles (1), un contrôleur prenant en compte cette mesure afin de déterminer lors de l'étape de transfert de la station de réception (2) vers un convoyeur (6, 9, 12) l'espace alloué à chaque article (1) mesuré sur ledit convoyeur (6, 9, 12) vers lequel il est transféré.

2. Procédé selon la revendication précédente, comportant en outre les étapes suivantes :
- transfert d'au moins deux articles (1b) vers ledit ascenseur amont (4), puis vers un troisième convoyeur (12) situé au-dessus ou en-dessous desdits premier et deuxième convoyeurs (6, 9),
- transfert de l'article (1) situé sur ledit troisième convoyeur (12) et le plus proche de ladite station de prélèvement (10) vers l'ascenseur aval (7), puis vers ladite station de prélèvement (10).

3. Procédé selon l'une des revendications précédentes, dans lequel avant l'étape de transfert d'un article (1) sur un convoyeur (6, 9, 12), l'instruction est donnée à un contrôleur de transférer cet article (1) particulier vers ladite station de prélèvement (10), ledit contrôleur commandant alors lesdits premier et deuxième convoyeurs (6, 9), et lesdits ascenseurs amont (4) et aval (7), afin de transférer ledit article (1) cible vers la station de prélèvement (10).

4. Procédé selon l'une des revendications précédentes, comportant en outre une étape de transfert d'au moins un article (1) de la station de prélèvement (10) vers un robot autonome.

5. Système de réception, de stockage et de prélèvement d'articles comportant :
- une station de réception (2), apte à accueillir au moins un article (1),
- une station de prélèvement (10), apte à accueillir au moins un article (1),
- au moins un ascenseur amont (4), ledit système comportant un moyen de transfert d'articles (1) de ladite station de réception (2) vers ledit ascenseur amont (4), et au moins un ascenseur aval (7), ledit système comportant un moyen de transfert d'articles (1) entre ledit ascenseur aval (7) et ladite station de prélèvement (10),
- au moins deux convoyeurs (6, 9) disposés l'un au-dessus de l'autre, au moins un desdits au moins deux convoyeurs (6, 9) étant apte à transférer des articles (1) dudit ascenseur amont (4) vers ledit ascenseur aval (7), et au moins un autre desdits au moins deux convoyeurs (6, 9) étant apte à transférer des articles (1) dudit ascenseur aval (7) vers ledit ascenseur amont (4), et
- un contrôleur commandant lesdits ascenseurs amont (4) et aval (7) et lesdits convoyeurs (6, 9) et une mémoire apte à communiquer avec ledit contrôleur afin que la position de chaque article (1) disposé sur un desdits convoyeurs (6, 9) soit enregistrée dans ladite mémoire, et que le contrôleur soit configuré de sorte à commander lesdits ascenseurs (4, 7) et lesdits convoyeurs (6, 9) afin d'amener un article (1) donné sur la station de prélèvement (10) après avoir transféré le cas échéant au moins un autre article (1) disposé entre ledit article (1) et l'ascenseur aval (7) vers un autre convoyeur (6, 9),
**caractérisé en ce qu'**il comprend un moyen de mesure apte à mesurer au moins une dimension d'un article (1), ledit contrôleur étant configuré de sorte à prendre en compte cette mesure afin de déterminer un espace alloué audit article (1) sur un desdits convoyeur (6, 9).

6. Système selon la revendication 5 comportant au moins trois convoyeurs (6, 9, 12) disposés l'un au-dessus de l'autre, au moins un desdits convoyeurs (12) étant configuré pour que le premier article (1) à être transféré vers la station de prélèvement (10) soit l'article (1) stocké le plus proche de l'ascenseur aval (7).

7. Système selon l'une des revendications 5 à 6 dans lequel au moins un desdits convoyeurs (6, 9, 12) comprend au moins deux bandes transporteuses disposées l'une à la suite de l'autre.

8. Système selon l'une des revendications 5 à 7 dans lequel la station de réception (10) comporte une paroi (13), ladite paroi (13) comportant une ouverture (14) permettant le passage des articles (1).

## Patentansprüche

1. Verfahren zum Empfangen, Lagern und Entnehmen von Artikel mit den folgenden Schritten in der Reihenfolge :
- Empfang der Artikel (1) an einer Empfangsstation (2),
- Transfer eines ersten Artikels (1) zu einem stromaufwärts gelegenen Aufzug (4) und dann zu einem ersten horizontalen Förderer (6), auf dem mindestens ein zweiter Artikel (1) zuvor gelagert ist, wobei der erste Förderer (6) dazu geeignet ist, Artikel (1) von dem stromaufwärts gelegenen Aufzug (4) zu einem stromabwärts gelegenen Aufzug (7) zu transferieren,
- Überführen des mindestens eines zweiten Artikels (1) zu dem stromabwärts gelegenen Aufzug (7) und dann zu einem zweiten horizontalen Förderer (9), der sich oberhalb oder unterhalb des ersten Förderers (6) befindet und geeignet ist, Artikel (1) von dem stromabwärts gelegenen Aufzug (7) zu dem stromaufwärts gelegenen Aufzug (4) zu überführen,
- Überführen des ersten Artikels (1) zu dem stromabwärts gelegenen Aufzug (7) und dann zu einer Entnahmestation (10),
**dadurch gekennzeichnet, dass** mindestens zwei Artikel (1) unterschiedliche Abmessungen haben, wobei das Verfahren einen Schritt des Messens mindestens einer Abmessung aller oder eines Teils der Artikel (1) umfasst, wobei eine Steuerung diese Messung berücksichtigt, um beim Schritt des Überführens von der Aufnahmestation (2) zu einem Förderer (6, 9, 12) den Raum zu bestimmen, der jedem gemessenen Artikel (1) auf dem Förderer (6, 9, 12), zu dem er überführt wird, zugeteilt ist.

2. Verfahren nach dem vorhergehenden Anspruch, weiter umfassend die folgenden Schritte:
- Überführen von mindestens zwei Artikel (1b) zu dem stromaufwärts gelegenen Aufzug (4) und dann zu einem dritten Förderer (12), der sich über oder unter dem ersten und zweiten Förderer (6, 9) befindet,
- Überführen des Artikel (1), der sich auf dem dritten Förderer (12) befindet und der Entnahmestation (10) am nächsten ist, zum stromabwärts gelegenen Aufzug (7) und dann zur Entnahmestation (10).

3. Verfahren nach einem der vorhergehenden Ansprüche, wobei vor dem Schritt des Überführens eines Artikels (1) auf einen Förderer (6, 9, 12) einem Controller die Anweisung erteilt wird, dieses bestimmte Artikel (1) zu der Entnahmestation (10) zu überführen, wobei der Controller dann den ersten und den zweiten Förderer (6, 9) sowie den stromaufwärts (4) und den stromabwärts (7) gelegenen Aufzug steuert, um das Zielartikel (1) zu der Entnahmestation (10) zu überführen.

4. Verfahren nach einem der vorhergehenden Ansprüche, das weiter einen Schritt umfasst, bei dem mindestens ein Artikel (1) von der Entnahmestation (10) an einen autonomen Roboter übergeben wird.

5. System zur Annahme, Lagerung und Entnahme von Artikel mit:
- einer Aufnahmestation (2), die geeignet ist, mindestens ein Artikel (1) aufzunehmen,
- einer Entnahmestation (10), die geeignet ist, mindestens ein Artikel (1) aufzunehmen,
- mindestens einem stromaufwärts gelegenen Aufzug (4), wobei das System Mittel zum Überführen von Artikel (1) von der Aufnahmestation (2) zu dem stromaufwärts gelegenen Aufzug (4) aufweist, und mindestens einen stromabwärts gelegenen Aufzug (7), wobei das System Mittel zum Überführen von Artikel (1) zwischen dem stromabwärts gelegenen Aufzug (7) und der Entnahmestation (10) aufweist,
- mindestens zwei Förderer (6, 9), die übereinander angeordnet sind, wobei mindestens einer der mindestens zwei Förderer (6, 9) dazu geeignet ist, Artikel (1) von dem stromaufwärts gelegenen Aufzug (4) zu dem stromabwärts gelegenen Aufzug (7) zu transportieren, und mindestens ein anderer der mindestens zwei Förderer (6, 9) dazu geeignet ist, Artikel (1) von dem stromabwärts gelegenen Aufzug (7) zu dem stromaufwärts gelegenen Aufzug (4) zu transportieren, und
- einer Steuerung, die die stromaufwärts (4) und stromabwärts (7) gelegenen Aufzüge und die Förderer (6, 9) steuert, und einen Speicher, der mit der Steuerung kommunizieren kann, so dass die Position jedes Artikels (1), der auf einem der Förderer (6, 9) angeordnet ist, in dem Speicher gespeichert wird, und dass die Steuerung so konfiguriert ist, dass sie die Aufzüge (4, 7) und die Förderer (6, 9) steuert, um einen bestimmten Artikel (1) auf die Entnahmestation (10) zu bringen, nachdem sie gegebenenfalls mindestens ein anderes Artikel (1), das zwischen dem Artikel (1) und dem stromabwärts gelegenen Aufzug (7) angeordnet ist, auf einen anderen Förderer (6, 9) überführt hat,
**dadurch gekennzeichnet, dass** sie ein Messmittel umfasst, das geeignet ist, mindestens eine Dimension eines Artikels (1) zu messen, wobei die Steuerung geeignet ist, diese Messung zu berücksichtigen, um einen Raum zu bestimmen, der dem Artikel (1) auf einem der Förderer (6, 9) zugewiesen wird.

6. System nach Anspruch 5 mit mindestens drei Förderern (6, 9, 12), die übereinander angeordnet sind, wobei mindestens einer der Förderer (12) so konfiguriert ist, dass das erste zur Entnahmestation (10) zu befördernde Artikel (1) das Artikel (1) ist, das am nächsten zum stromabwärts gelegenen Aufzug (7) gelagert wird.

7. System nach einem der Ansprüche 5 oder 6, bei dem mindestens einer der Förderer (6, 9, 12) mindestens zwei hintereinander angeordnete Förderbänder umfasst.

8. System nach einem der Ansprüche 5 bis 7, bei dem die Aufnahmestation (10) eine Wand (13) aufweist, wobei die Wand (13) eine Öffnung (14) aufweist, die den Durchgang der Artikel (1) ermöglicht.

## Claims

1. A method of receiving, storing and picking articles comprising the following steps in order:
- receiving items (1) at a receiving station (2),
- transfer of a first article (1) to an upstream lift (4), then to a first horizontal conveyor (6) on which at least one second article (1) is previously stored, said first conveyor (6) being capable of transferring articles (1) from said upstream lift (4) to a downstream lift (7),
- transferring said at least one second item (1) to said downstream lift (7), then to a second horizontal conveyor (9) located above or below said first conveyor (6) and capable of transferring items (1) from said downstream lift (7) to said upstream lift (4),
- transferring said first item (1) to said downstream lift (7), then to a picking station (10),
**characterized in that** at least two articles (1) have different dimensions, said method comprising a step of measuring at least one dimension of all or some of the articles (1), a controller taking this measurement into account in order to determine during the transfer step from the receiving station (2) to a conveyor (6, 9, 12) the space allocated to each article (1) measured on said conveyor (6, 9, 12) to which it is transferred.

2. A method according to the preceding claim, further comprising the following steps:
- transfer of at least two items (1b) to said upstream lift (4), then to a third conveyor (12) located above or below said first and second conveyors (6, 9),
- transferring the item (1) located on said third conveyor (12) and closest to said picking station (10) to the downstream lift (7) and then to said picking station (10).

3. A method according to one of the preceding claims, wherein prior to the step of transferring an article (1) onto a conveyor (6, 9, 12), a controller is instructed to transfer this particular article (1) to said picking station (10), said controller then controlling said first and second conveyors (6, 9), and said upstream (4) and downstream (7) lifts, in order to transfer said target article (1) to the picking station (10).

4. A method according to one of the preceding claims, further comprising a step of transferring at least one article (1) from the picking station (10) to an autonomous robot.

5. An article receiving, storage and retrieval system comprising :
- a receiving station (2), able to receive at least one item (1),
- a picking station (10), able to receive at least one item (1),
- at least one upstream lift (4), said system including means for transferring articles (1) from said receiving station (2) to said upstream lift (4), and at least one downstream lift (7), said system including means for transferring articles (1) between said downstream lift (7) and said picking station (10),
- at least two conveyors (6, 9) arranged one above the other, at least one of said at least two conveyors (6, 9) being able to transfer articles (1) from said upstream lift (4) to said downstream lift (7), and at least one other of said at least two conveyors (6, 9) being able to transfer articles (1) from said downstream lift (7) to said upstream lift (4), and
- a controller controlling said upstream (4) and downstream (7) lifts and said conveyors (6, 9) and a memory able to communicate with said controller so that the position of each article (1) placed on one of said conveyors (6, 9) is recorded in said memory, and that the controller is configured so as to control said lifts (4, 7) and said conveyors (6, 9) in order to bring a given article (1) to the picking station (10) after having transferred, if necessary, at least one other article (1) arranged between said article (1) and the downstream lift (7) to another conveyor (6, 9),
**characterized in that** it comprises measuring means capable of measuring at least one dimension of an article (1), said controller being capable of taking this measurement into account in order to determine a space allocated to said article (1) on one of said conveyors (6, 9).

6. System according to claim 5 comprising at least three conveyors (6, 9, 12) arranged one above the other, at least one of said conveyors (12) being configured so that the first item (1) to be transferred to the picking station (10) is the item (1) stored closest to the downstream lift (7).

7. System according to one of claims 5 or 6 in which at least one of the said conveyors (6, 9, 12) comprises at least two conveyor belts arranged one after the other.

8. System according to one of claims 5 to 7 in which the receiving station (10) comprises a wall (13), said wall (13) comprising an opening (14) allowing the articles (1) to pass through.
